# EUROPEAN PATENT APPLICATION

(11) **EP 1 768 310 A2**
(43) Date of publication of application: **28.03.2007**
(21) Application number: 06026240.9
(22) Date of filing: 08.02.2002
(51) Int. Cl.: H04L 12/26, H04L 29/06, H04L 29/08, G06F 11/34

(54) **Server machine, client machine, server program storage medium, client program storage medium, server-client system, and information processing method**

(30) Priority: 16.05.2001 JP 2001146795; 28.11.2001 JP 2001362658
(62) Divisional of application: 02250873.3
(71) Applicant: FUJITSU LIMITED, Kawasaki-shi, Kanagawa 211-8588 (JP)
(72) Inventor: Kitazawa, Kouki Fujitsu Prime Software Tech. LTD, Nagoya-shi Aichi 461-0004 (JP); Yamaguchi, Yukiyo Fujitsu LTD, Kawasaki-shi Kanagawa 211-8588 (JP); Motoyama, Yoshiko Fujitsu LTD, Kawasaki-shi Kanagawa 211-8588 (JP); Uchida, Kiyoshi Fujutsu Personal Computer Systems, Inagi-shi Tokyo 206-0801 (JP)
(74) Representative: Billington, Lawrence Emlyn

(57) **Abstract**

A server machine (100) is connected via a communication line (600) to a client machine (300, 400, 500) receiving an offer of information, and comprises an information management section storing in a predetermined providing information database, information to be provided for a client machine (300, 400, 500) in association with information to be transmitted from the client machine; a server side receiving section receiving information transmitted from said client machine (300, 400, 500); and a server side transmission section responsive to a receipt of the information transmitted from said client machine (300, 400, 500) by said server side receiving section, for reading from said providing information database information to be provided for said client machine, which is associated with information involved in the received information from said client machine, and transmitting the information read from said providing information database to said client machine; wherein said information management section stores in said providing information database, information indicative of an advice as to utilization of the client machine (300, 400, 500) in the form of information to be provided for the client machine.

## Description

The present invention relates to a server machine to be coupled to a client machine receiving an offer of information via a communication line, a client machine to be coupled to a server machine providing information via a communication line, a server program storage medium storing a server program which causes a computer to operate as a server machine, a client program storage medium storing a client program which causes a computer to operate as a client machine, a server-client system having the server machine and the client machine as mentioned above, and an information processing method in the server-client system.

Recently, in many cases, a personal computer (hereinafter referred to as a "PC") is pre-loaded with many sorts of hardware, and installed with many sorts of software therein, so that the personal computer has many functions already at the stage of purchase.

Further, in order that a user may use those many functions efficiently, many manuals appear on the market, and there has been developed a so-called on-line manual system, in which a manual is distributed through a communication line.

As mentioned above, recently, in many cases the PC is loaded with many functions beforehand. However, a user is not always high in skill and there are many users who utilize only a very few parts of the functions, not recognizing the effect of all the functions, or even the existence of the functions. Thus, those functions are not always sufficiently utilized. Further, for a user who satisfies the use of only a part of the functions, installing multi-functions sacrifices the operational efficiency of the user. Thus, this is a disadvantage for the user.

On the other hand, on the vendor's side, even if a number of functions are loaded on the PC, the beneficial effect of loading of a number of functions will be reduced if users who use the functions efficiently, are not so many. Many vendors introduce new functions. However, ways of use of the PC and user knowledge levels are diverse, and it is difficult to obtain an optimum effect even if information is delivered to everybody.

As a technique of aiding a user who does not have enough knowledge, and of improving operability, there has been developed an on-line manual. According to the on-line manual, a user may obtain a manual via a communication line on an on-line basis, and refer to the manual thus obtained, so that the user can enhance his knowledge and improve his operability.

However, almost all the conventional on-line manuals provide wide and shallow information under the circumstance that information that a user needs is searched beforehand. And in many cases, it is difficult for a user to understand the manual.

Further, it is usual that a user's need is full of variety and varies with the passage of time. Consequently, it is necessary for the on-line manual provider to always investigate as to whether the provided information is appropriate.

In order to perform an investigation of the using situation of the PC by a user, and an investigation as to whether the provided information is appropriate, as a method of investigation the user is obliged to adopt a user questionnaire survey and a usability test. This work takes a great deal of time and is inefficient.

Japanese Patent Publication TokuKai-Hei.10-91556 discloses a technology, for the purpose of serving to perform a charging processing through grasping a time required for the use of software and the like by a user, in which a client computer is coupled via communication means to a server machine, the client computer is installed with a utilization information stored program, the server machine is installed with a utilization information total program, the utilization information stored program is used to detect an event, a state of the use is determined in accordance with a time interval of an input operation to store the actual use results in a utilization information file, the utilization information file is transferred to the server machine at regular intervals, and the utilization information stored program is used to total and analyze the received and stored utilization information, so that results data of utilization is outputted.

However, the technology disclosed in Japanese Patent Publication TokuKai-Hei.10-91556 is effective for grasping the use time of software and the like, but has nothing to propose an effective utilization method of computers and the like to meet needs of individual users.

Japanese Patent Publication TokuKai.2000-319816 discloses a technology in which in a mobile terminal, the mobile terminal is automatically connected to a management server without a user consciousness so as to receive a distribution of necessary software and data, and so as to transmit to the management server management information of a hardware and management information of a software.

However, the technology disclosed in Japanese Patent Publication TokuKai-Hei.10-91556 is to allow a mobile terminal to be connected to a management server without a user consciousness, but has nothing to adopt the mobile terminal to the respective needs of individual users.

Japanese Patent Publication TokuKai-Hei.7-191920 discloses a technology, for the purpose of serving to promptly perform removal and recovery of an obstacle of computers on a communication network, in which in the event that an obstacle occurs on a client, information as to the obstacle is transmitted to a server to judge a state of occurrence of the obstacle, so that the server transmits to the client an instruction of removal and recovery of the obstacle.

However, the technology disclosed in Japanese Patent Publication TokuKai-Hei.7-191920 is to aim recovery of the obstacle but not to provide a method of utilization of computers and the like adapted to individual users.

In view of the foregoing, taking into consideration a development of the recent communication system, it is an object of the present invention to provide a server machine and/or a client machine, which together constitute a server-client system proposing a method of a more effective utilization for computers and the like, a server program operative in the server machine and a server program storage medium storing the server program, which constitute the server-client system, the server-client system having the server machine and the client machine as mentioned above, and an information processing method in the server-client system.

A first aspect of the present invention provides a client machine for connection via a communication line to a server machine providing information, said client machine comprising:
a monitor section for monitoring said client machine to collect information involved in said client machine;
a client side transmission section for transmitting the information collected by said monitor section to said server machine; and
a client side receiving section for receiving information provided from said server machine in accordance with the information transmitted from said client side transmission section to said server machine.

In the client machine as mentioned above, it is preferable that said monitor section collects, as the information involved in said client machine, information as to a grasp of utilization of said client machine.

In the client machine as just described, it is preferable that said monitor section collects, as the information as to a grasp of utilization of said client machine, information as to a grasp of utilization of a database constructed in said client machine.

A second aspect of the present invention provides a server machine for connection via a communication line to a client machine receiving an offer of information, said server machine comprising:
an information management section for storing in a predetermined providing information database, information to be provided for a client machine in association with information to be transmitted from the client machine;
a server side receiving section for receiving information transmitted from said client machine; and
a server side transmission section responsive to a receipt of the information transmitted from said client machine by said server side receiving section, for reading from said providing information database information to be provided for said client machine, which is associated with information involved in the received information from said client machine, and for transmitting the information read from said providing information database to said client machine.

It is noted that "information involved in the received information from said client machine" may imply information transmitted from the client machine and received by the server side receiving section per se, or information extracted from the received information, or alternatively information obtained through processing of the received information.

In the server machine as mentioned above, it is preferable that said information management section stores in said providing information database, information indicative of an advice as to utilization of the client machine in form of information to be provided for the client machine.

In a server machine according to the present invention as mentioned above, it is preferable that said client machine accesses a predetermined reference information database constructed in said client machine to obtain information in said reference information database, and
said information management section stores in said providing information database, new information associated with information in said reference information database in form of information to be provided for the client machine.

In the client machine according to the present invention in its first aspect, it is preferable that said client machine further comprises an information reference section referring to information stored in a predetermined reference information database in accordance with an operation,
said monitor section monitors an access to the information stored in said reference information database based on the operation,
said client machine further comprises a decision section deciding whether discrimination information indicative of accessed information is to be transmitted to said server machine in accordance with an access monitoring result by said monitor section, and
said client side transmission section transmits the discrimination information to said server machine when said decision section decides that the discrimination information is to be transmitted to said server machine.

In the client machine it is preferable that said monitor section monitors an access to the information stored in said reference information database based on the operation to collect information indicative of a number of times of access as to information, and
said decision section decides, when information indicative that a number of times of access reaches a predetermined number of times is generated as a result of monitoring by said monitor section, that the discrimination information indicative of accessed information is to be transmitted to said server machine.

In the server machine it is preferable that said client machine further comprises an information reference section referring to information stored in a predetermined reference information database in accordance with an operation,
said information management section stores in said providing information database new information associated with information in said reference information database in form of information to be provided for the client machine,
said server side receiving section receives discrimination information indicative of accessed information by said reference information database in the client machine, and
said server side transmission section, responsive to a receipt of the discrimination information by said server side receiving section, reads from said providing information database new information associated with information indicated by the discrimination information, and transmits the new information.

In the client machine it is possible that said monitor collects, as the information as to a grasp of utilization of said client machine, information including a list of software of preinstalled in the client machine and information of install and uninstall of software after initiation of the use of the client machine. Or it is possible that said monitor collects, as the information as to a grasp of utilization of said client machine, information including a setting environment of the client machine and information of alteration of the setting environment of the client machine. Or alternatively it is acceptable that said monitor collects, as the information as to a grasp of utilization of said client machine, information including information indicative of a utilization state of structural elements of the client machine.

In the server machine it is preferable that said information management section stores in said providing information database information indicative of an advice as to utilization of the client machine in form of information to be provided for the client machine,
said server side transmission section, responsive to a receipt of the information transmitted from the client machine by said server side receiving section, extracts information as to utilization of the client machine, reads from said providing information database information indicative of an advice for improvement for utilization of the client machine, and transmits the information thus read to the client machine.

A third aspect of the present invention provides a client program storage medium storing a client program to be executed by a computer connected via a communication line to a server machine providing information, said client program causing said computer to be a client machine, said client machine comprising:
a monitor section monitoring said computer to collect information involved in said computer;
a client side transmission section transmitting the information collected by said monitor section to said server machine; and
a client side receiving section receiving information provided from said server machine in accordance with the information transmitted from said client side transmission section to said server machine.

A fourth aspect of the present invention provides a server program storage medium storing a server program to be executed by a computer connected via a communication line to a client machine receiving an offer of information, said server program causing said computer to be a server machine, said server machine comprising:
an information management section storing in a predetermined providing information database information to be provided for a client machine in association with information to be transmitted from the client machine;
a server side receiving section receiving information transmitted from said client machine; and
a server side transmission section responsive to a receipt of the information transmitted from said client machine by said server side receiving section, reading from said providing information database information to be provided for said client machine, which is associated with information involved in the received information from said client machine, and transmitting the information read from said providing information database to said client machine.

It is noted that the client program storage medium of the preset invention may include client program storage medium storing all types of client programs implementing various types of client machines of the present invention in a first computer. Further, in a similar fashion, it is noted that the server program storage medium of the preset invention may include server program storage medium storing all types of server programs implementing various types of server machines of the present invention in a second computer.

A fifth aspect of the present invention provides a server-client system having a server machine providing information and a client machine receiving an offer of information, which are coupled with one another via a communication line,
wherein said client machine comprises:
a monitor section monitoring said client machine to collect information involved in said client machine;
a client side transmission section transmitting the information collected by said monitor section to said server machine; and
a client side receiving section receiving information provided from said server machine in accordance with the information transmitted from said client side transmission section to said server machine, and
wherein said server machine comprises:
an information management section storing in a predetermined providing information database information to be provided for a client machine in association with information to be transmitted from the client machine;
a server side receiving section receiving information transmitted from said client machine; and
a server side transmission section responsive to a receipt of the information transmitted from said client machine by said server side receiving section, reading from said providing information database information to be provided for said client machine, which is associated with information involved in the received information from said client machine, and transmitting the information read from said providing information database to said client machine.

A sixth aspect of the present invention provides an information processing method in a server-client system having a server machine providing information and a client machine receiving an offer of information, which are coupled with one another via a communication line,
wherein said server machine stores in a predetermined providing information database, information to be provided for a client machine in association with information to be transmitted from the client machine,
said client machine monitors said client machine to collect information involved in said client machine, and transmits the collected information to said server machine,
said server machine receives the information transmitted from said client machine, reads from said providing information database information to be provided for said client machine, which is associated with information involved in the received information from said client machine, and transmits the information read from said providing information database to said client machine, and
said client machine receives information provided from said server machine in accordance with the information transmitted from said client machine to said server machine.

### BRIEF DESCRIPTION OF THE DRAWINGS

Fig. 1 is a schematic construction view of a part of a computer system in which embodiments of a server machine and a client machine according to the present invention are applied.
Fig. 2 is a hardware construction view of the computer system having the outside appearance shown in Fig. 1.
Fig. 3 is a schematic construction view of a server program, a server program storage medium, a client program and a client program storage medium according to a first embodiment of the present invention.
Fig. 4 is a schematic construction view of embodiments of a server machine and a client machine according to the present invention.
Fig. 5 is a flowchart useful for understanding operations of a server machine and a client machine according to the embodiments of the present invention.
Fig. 6 is a schematic construction view of a server program, a server program storage medium, a client program and a client program storage medium according to a second embodiment of the present invention.
Fig. 7 is a flowchart useful for understanding an operation of a client machine.
Fig. 8 is a flowchart useful for understanding an operation of a server machine.
Fig. 9 is a view showing an example of information as to utilization of a client machine, which is collected by the client machine, and an example of an application pattern extracted from the information.
Fig. 10 is a view showing an example of information as to utilization of a client machine, which is collected by the client machine, and an example of an application pattern extracted from the information.
Fig. 11 is a view showing an example of information as to utilization of a client machine, which is collected by the client machine, and an example of an application pattern extracted from the information.
Fig. 12 is a view showing by way of example an application pattern data and adaptation way data.

### DETAILED DESCRIPTION OF PREFERRED EMBODIMENTS

Embodiments of the present invention will be described with reference to the accompanying drawings.

First, there will be described a hardware structure of a server machine and a client machine common to various embodiments which will be described hereinafter.

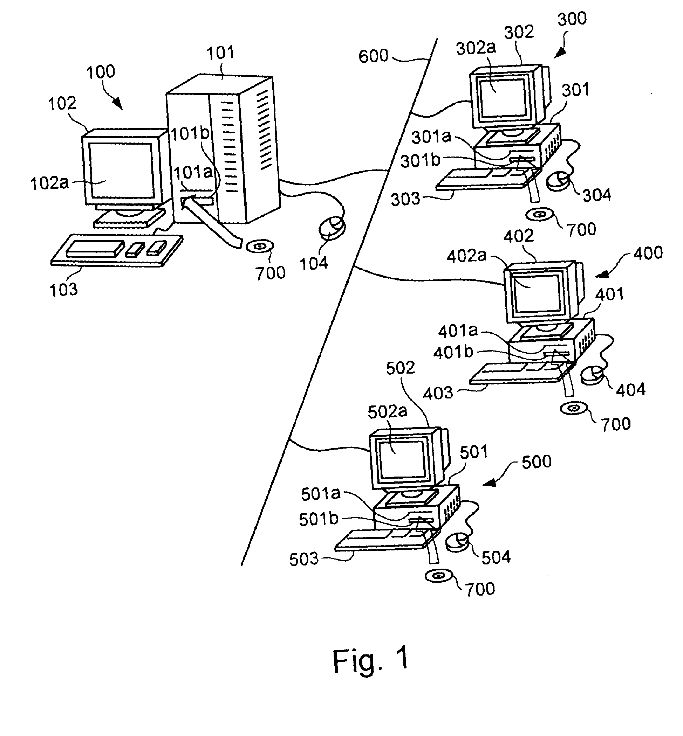

Fig. 1 is a schematic construction view of a part of a computer system in which a server machine and a client machine are applied.

Fig. 1 exemplarily shows a computer 100 serving as a server machine and three computers 300, 400 and 500 serving as a client machine, which are connected to the computer 100 via a communication line 600. Any one is acceptable, as the communication line 600, which is an Internet, a LAN (Local Area Network), a WAN (Wide Area Network) and the like.

A server program is installed in the computer 100, and a client program is installed in the three computers 300, 400 and 500, so that those computers serve as the server machine and the client machines, respectively.

The computer 100 and the computers 300, 400 and 500 are each constituted of a computer system, for example, a workstation and a personal computer.

The computers 100, 300, 400 and 500 respectively comprise: main frames 101, 301, 401 and 501 each incorporating therein a CPU (Central Processing Unit), a RAM (Random Access Memory), a hard disk, and a communicating board; display units 102, 302, 402 and 502 for displaying images and strings of characters on display screens 102a, 302a, 402a and 502a in accordance with instructions from the main frames 101, 301, 401 and 501, respectively; keyboards 103, 303, 403 and 503 for inputting user's instructions to the computers 100, 300, 400 and 500; and mice 104, 304, 404 and 504 for inputting orders associated with icons or the like displayed on positions on the display screens 102a, 302a, 402a and 502a when the positions are designated, respectively.

The main frames 101, 301, 401 and 501 comprise, on the outside appearance, flexible disks (not illustrated), flexible disk mounting slots 101a, 301a, 401a and 501a onto which CD-ROMs 700 are loaded, respectively, and CD-ROM mounting slots 101b, 301b, 401b and 501b, respectively. Inside main frames 101, 301, 401 and 501, there are incorporated flexible disk drives for driving the flexible disks loaded through the flexible disk mounting slots 101a, 301a, 401a and 501a and CD-ROM drives for driving the CD-ROMs 700 loaded through the CD-ROM mounting slots 101b, 301b, 401b and 501b, respectively.

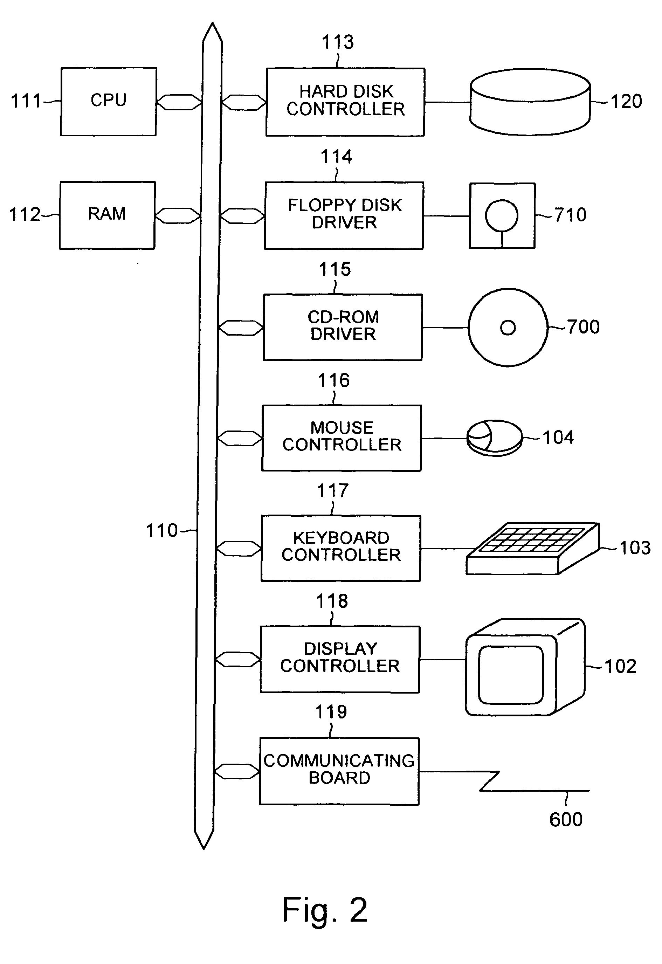

Fig. 2 is a hardware construction view of the computer system having the outside appearance shown in Fig. 1. Here, while the computer 100 will be typically explained, the computers 300, 400 and 500 have the same structure as the computer 100.

The hardware construction view of the computer system shows a CPU 111, a RAM 112, a hard disk controller 113, a flexible disk drive 114, a CD-ROM drive 115, a mouse controller 116, a keyboard controller 117, a display controller 118, and a communicating board 119. Those are connected to one another through a bus 110.

The flexible disk drive 114 and the CD-ROM drive 115 access, as described referring to Fig. 1, the flexible disk 710 and the CD-ROM 700, which are loaded through the flexible disk mounting slot 101a and the CD-ROM mounting slot 101b, respectively. The communicating board 119 is connected to the communication line 600.

Fig. 2 further shows a hard disk 120 to be accessed by the hard disk controller 113, a mouse 104 to be controlled by the mouse controller 116, a keyboard 103 to be controlled by the keyboard controller 117, and a CRT display 102 to be controlled by the display controller 118.

The CD-ROMs 700, which are a server program storage medium or a client program storage medium for storing a server program or a client program of the present invention, respectively, are loaded onto the CD-ROM mounting slots 101b, 301b, 401b and 501b of the above-mentioned computers, respectively, so that the server program stored in the CD-ROMs 700 is installed in the computer 100 and the client program is installed in the three computers. Thus, there are constructed a server machine and a client machine.

Incidentally, a sort of devices, for example, a portable equipment such as a personal digital assistant, a mobile communication terminal such as a portable telephone, another dedicated terminal such as a handy terminal, and electric appliances, is not restricted to the above-mentioned ones, as far as it is provided with functions (a data communication function, a function to execute a processing defined by a program of the present invention, etc.) necessary for implementing the present invention. Further, even an apparatus or a device, which is not intended to be practiced first in the present invention, it may be a client machine or a server machine in the present invention at the stage that it is provided with the function of the present invention.

The storage medium storing the program of the present invention is also not restricted to the above-mentioned example. Further, it is acceptable that the program is stored in a storage medium inside an apparatus beforehand, but not installed in the apparatus through an external storage medium such as a portable type of storage medium and another device.

Next, there will be described a server program, a server program storage medium, a client program and a client program storage medium according to a first embodiment of the present invention.

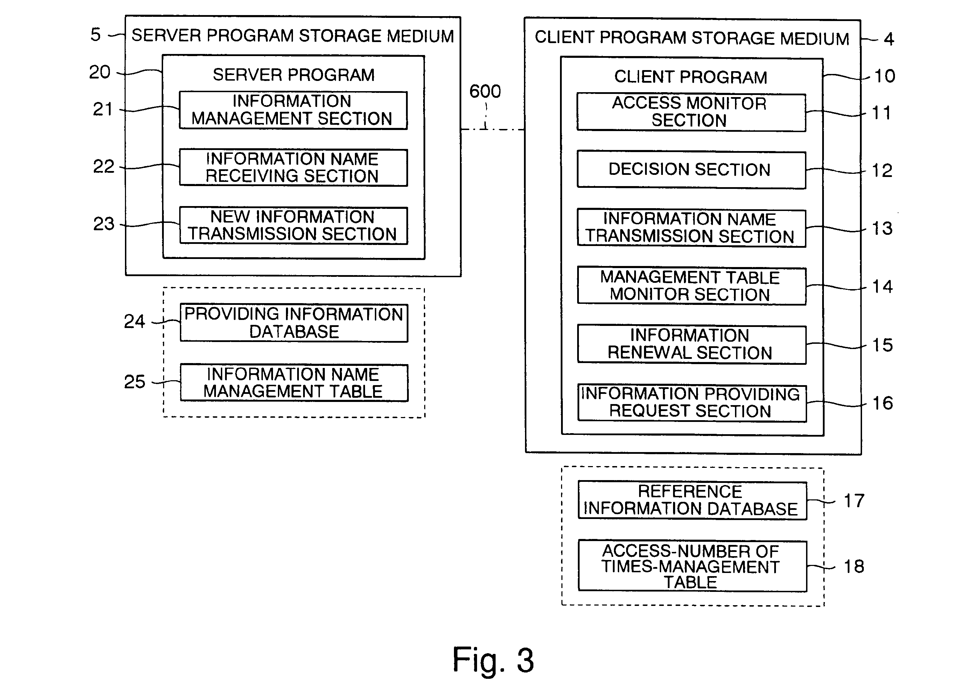

Fig. 3 is a schematic construction view of a server program, a server program storage medium, a client program and a client program storage medium according to a first embodiment of the present invention.

As shown in Fig. 3, a client program storage medium 4 stores therein a client program 10 which causes the computer to operate as a client machine comprising an access monitor section 11, a decision section 12, an information name transmission section 13, a management table monitor section 14, an information renewal section 15 and an information providing request section 16. The client program storage medium 4 typically represents a CD-ROM before a client program stored in the client program storage medium 4 is installed in the computer and a hard disk of the computer after the client program stored in the client program storage medium 4 is installed.

While the present embodiment utilizes information name as discrimination information referred to in the present invention, any one is acceptable, as the discrimination information, which can specify information, for example, a code.

The client program 10 is executed by the computers 300, 400 and 500 (cf. Fig. 1), which are connected via a communication line 600 to a server machine, so that those computers are operated as a client machine in which information provided from the server machine is referred to.

The access monitor section 11 monitors an access to information in the reference information database 17 according to an operation of the information-referring operator. Further, the access monitor section 11 not only monitors an access to information in the reference information database 17 according to an operation of the information-referring operator, but also displays the number of times of access on the respective information on a screen involved in an operation of the information-referring operator. Furthermore, the access monitor section 11 not only monitors an access to information in the reference information database 17 according to an operation of the information-referring operator, but also stores a number of times of access on the respective information into an access-number of times-management table 18. The access monitor section 11 corresponds to an example of the monitor section referred to in the present invention in combination of the management table monitor section 14.

The decision section 12 decides whether an information name of information accessed is transmitted to the server machine in accordance with a result of access monitoring by the access monitor section 11. The decision section 12 corresponds to an example of the decision section referred to in the present invention.

The information name transmission section 13 transmits the information name of the information to the server machine, when the decision section 12 decides that the information name of the information accessed is to be transmitted. The information name transmission section 13 corresponds to the client side transmitting section referred to in the present invention.

The management tables monitor section 14 monitors the number of times of access on the respective information stored in the access-number of times-management table 18.

The information renewal section 15 renews information of the reference information database 17 in accordance with new information in the event that the server machine returns the new information in accordance with transmission of the information name from the information name transmission section 13.

The information providing request section 16 requests of the server machine that it provides new information in accordance with an operation of an information-referring operator.

A server program storage medium 5 stores therein, as shown in Fig. 3, a server program 20 which causes the computer to operate as a server machine having an information management section 21, an information name receiving section 22 and a new information transmission section 23. The server program storage medium 5, in the same way as the client program storage medium 4, typically represents a CD-ROM before a client program stored in the server program storage medium 5 is installed in the computer and a hard disk of the computer after the server program stored in the server program storage medium 5 is installed.

While the present embodiment utilizes information name as an example of discrimination information referred to in the present invention, any one is acceptable, as the discrimination information, which can specify information, for example, a code.

The server program 20 is executed by the computer 100 (cf. Fig. 1), which is connected via the communication line 600 to a client machine referring to the client machine, so that the computer is operated as a server machine comprising the information management section 21, the information name receiving section 22 and the new information transmission section 23.

The information management section 21 previously creates new information corresponding to information provided for the information-referring operator and stores the same in a predetermined providing information database 24, and in addition stores an information name of the new information in a predetermined information name management table 25. The information management section 21 corresponds to an example of the information management section.

The information name receiving section 22 receives an information name of the information transmitted from the client machine, which reaches a predetermined number of times of access in the client machine. The information name receiving section 22 corresponds to an example of the server side management section referred to in the present invention.

The new information transmission section 23 inquires of the information management section 21 whether new information, which is associated with information of the information name received by the information name receiving section 22, is already created, and if the new information is already created, then reads the new information from the providing information database 24 and transmits the same to the client machine.

Incidentally, the "new information" may be supplementary information supplementing information of the information name transmitted from the client machine to the server machine, or alternatively the "new information" may be detailed information explaining in detail information of the information name transmitted from the client machine to the server machine.

Next, there will be explained operations of the server machine and the client machine of the present embodiment.

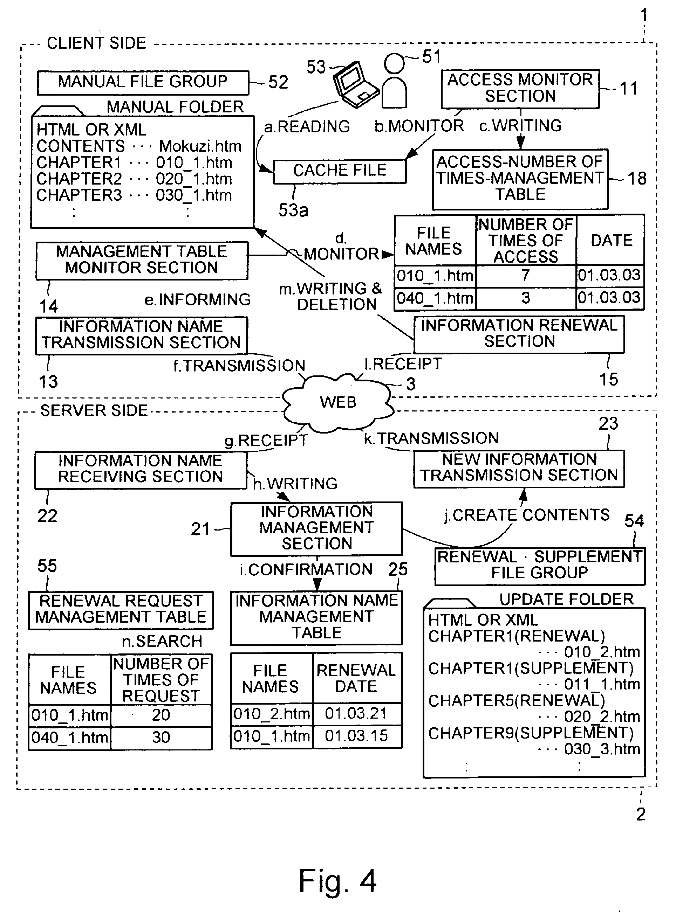

Fig. 4 is a schematic construction view of embodiments of a server machine and a client machine according to the present invention.

Fig. 4 shows a client machine 1 formed on a computer at a client side, a sever machine 2 formed on a computer at a server side and a Web 3 serving as a communication line for connecting the client machine 1 with the server machine 2. While Fig. 1 shows three computers 300, 400 and 500 operating as the client machine, Fig. 4 typically shows one client machine 1.

The reference information database 17 (cf. Fig. 3) of the client machine 1 at the client side stores therein information as to the on-line manual provided from the server machine 2. According to the present embodiment, as shown in Fig. 4, as a manual file group 52, for example, a "Manual Folder" stores therein information as set forth below:

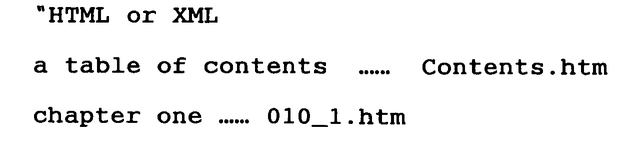

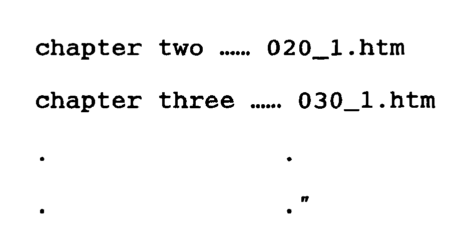

Thus, that information can be referred to in accordance with an operation of an information-referring operator.
a. When an information-referring operator uses a Browser 53 to read the manual file group 52 in the reference information database 17 (cf. Fig. 3),
b. the access monitor section 11 (cf. Fig. 3) monitors of a cache file 53a of the Browser 53,
c. and counts the number of times of access to a specified file name and writes the number of times of access into the access-number of times-management table 18. In the access-number of times-management table 18 of Fig. 4, there is written "file name: 010_1.htm, number of times of access: 7 times, date: March 3, 2001, file name: 040_1.htm, number of times of access: 7 times, date: March 3, 2001".
d. The management table monitor section 14 (cf. Fig. 3) monitors the number of times of access for writing into the access-number of times-management table 18.
e. The decision section 12 (cf. Fig. 3) decides, when it is detected that the number of times of access reaches a predetermined number of times, that an information name of the accessed information is transmitted to the server machine 2. According to the present embodiment, since n = 5 is set up, it is decided that file name: 010_1.htm, which is involved in the number of times of access: 7 times, is to be transmitted.
f. The information name transmission section 13 (cf. Fig. 3) transmits, when the decision section 12 decides the transmission, the information name (010_1.htm) of the information, via the Web 3 to the server machine 2.
g. The information name receiving section 22 (cf. Fig. 3) receives the information name transmitted from the client machine 1, that is, 010_1.htm.
h. The information management section 21 (cf. Fig. 3) previously creates new information corresponding to information provided for the information-referring operator and stores the same in a renewal and supplement file group 54 in the predetermined providing information database 24 (cf. Fig. 3), and in addition stores an information name of the new information in a predetermined information name management table 25. That is, as the renewal and supplement file group 54, for example, a "Update Folder" stores therein information as set forth below: 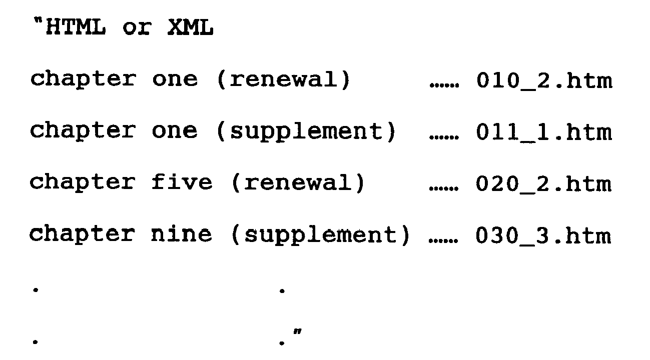 The information name management table 25 stores therein "file name: 010_2.htm, renewal date: March 21, 2001, file name: 010_1.htm, renewal date: March 15, 2001".
i. The new information transmission section 23 (cf. Fig. 3) inquires of the information management section 21 whether the new information corresponding to the information of the information name received by the information name receiving section 22 is already created and is stored in the information name management table 25. In the event that the new information is already created,
j. the new information is read from the renewal and supplement file group 54 to create a table of contents in accordance with the file name thus read.
k. The new information transmission section 23 transmits the file and the table of contents to the client machine 1.
   That is, according to the example shown in Fig. 4, since the new information (file name: 010_2.htm, renewal date: March 21, 2001) corresponding to the information name (010_1.htm) is already created and stored in the information name management table 25, the new information transmission section 23 reads "chapter one (renewal) ...... 010_2.htm" from the renewal and supplement file group 54, and creates a table of contents in accordance with the file name thus read and then transmits the same via the Web 3 to the client machine 1.
l. The information renewal section 15 (cf. Fig. 3) receives, when the server machine 2 returns new information in accordance with transmission of the information name from the information name transmission section 13, the new information, that is, the file and the contents,
m. and renews information of the manual file group 52 in the reference information database 17 (cf. Fig. 3) in accordance with the received information.
   Thus, an information-referring operator, who refers to the reference information database 17 of the client machine 1, can refer to the new information according to information needs of the information-referring operator.
n. Incidentally, it is acceptable that the server machine 2 is provided with a renewal request management table 55 to search as to what topic is highest in a degree of reference. That is, as shown in Fig. 4, the renewal request management table 55 stores therein, for example, information "the number of times of requirement for the file name: 010_1.htm is 20 times, and the number of times of requirement for the file name: 040_1.htm is 30 times". This makes it possible to search as to what topic is highest in a degree of reference. Accordingly, very effective means for grasping user's needs is available for an information provider.
o. Further, it is acceptable to provide such an arrangement that the client machine 1 is provided with the information providing request section 16 (cf. Fig. 3) to request of the server machine 2 to provide the new information in accordance with an operation of the information referring operator. This makes it possible for the information referring operator to have providing of new information at a desired time point regardless of the number of times of access to the topic.

Next, there will be described an information reference operation according to the ptresent embodiment.

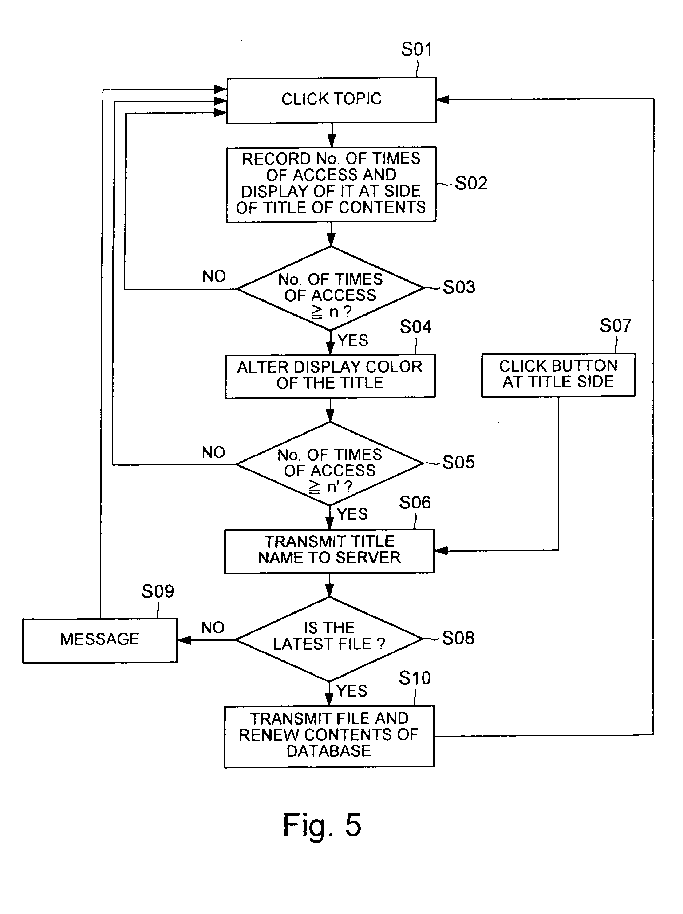

Fig. 5 is a flowchart useful for understanding operations of a server machine and a client machine according to the present embodiment.

First, when an information-referring operator clicks a topic displayed on a screen through an operation of a client machine (a step S01), the access monitor section 11 (cf. Fig. 3) monitors an access to information in the reference information database 17 (cf. Fig. 3) according to an operation of the information-referring operator, and also stores a number of times of access on the respective information into an access-number of times-management table 18. Further, the access monitor section 11 displays the number of times of access on the respective information on a screen involved in an operation of the information-referring operator at the side of a title of the contents (a step S02).

Incidentally, also in the conventional on-line manual system, there exists one in which a history as to what topic is referred to by a user is displayed. However, the conventional one is not to display on the display screen information as to what topic is referred to by an information-referring operator and how many times it is, as in the present embodiment. Thus, according to the present embodiment, it is possible to readily perform a retrieval of a topic, which is often referred to by the information-referring operator, since such a topic is quite obvious.

The decision section 12 (cf. Fig. 3) decides whether information, in which the number of times of access reaches a predetermined number of times: n, is generated (a step S03). In the event that it is detected that such information is generated, the process goes to a step S04. If not, the process returns to the step S01 to carry out processing for the next topic.

In a step S04, a display color of the title of information reaching the number of times; n is changed, so that the user can confirm it.

Next, it is decided whether the number of times of access reaches a predetermined number of times: n' (a step S05). When it is decided that the number of times of access reaches the number of times: n', the process goes to a step S06, and if not, then the process returns to the step S01 to carry out processing for the successive topic. Here, while it is acceptable that a value of the number of times: n' in the step S05 is the same as that of the number of times: n in the step S03, it is desired that the value of the number of times: n' is set up to be slightly larger than that of the number of times: n.

In a step S06, the information name transmission section 13 (cf. Fig. 3) transmits the title name to the server machine 2 (the step S06) and the process goes to a step S08. Incidentally, in the step S04, it is acceptable to provide such an arrangement that also when an operator clicks a button at the side of the title that is changed in display color (a step S07), the process goes to the step S06. This arrangement makes it possible to perform processing in a user's desired timing.

In a step S08, the information management section 21 (cf. Fig. 3) of the server machine 2 searches whether the information name management table 25 stores therein new information corresponding to the title name transmitted from the client machine 1 (a step S08). In the event that the new information is stored in the information name management table 25, the new information transmission section 23 reads the new information from the renewal and supplement file group 54 (cf. Fig. 3) and transmits the same to the client machine 1. Upon receipt of the new information, the client machine 1 renews contents of the manual file group 52 in accordance with the new information (a step S10), and the process returns to the step S01.

On the other hand, in the step S08, in the event that the new information is not stored in the information name management table 25, its message is displayed on the display screen (a step S09), and the process returns to the step S01.

Next, there will be explained a server program, a server program storage medium, a client program and a client program storage medium according to a second embodiment of the present invention.

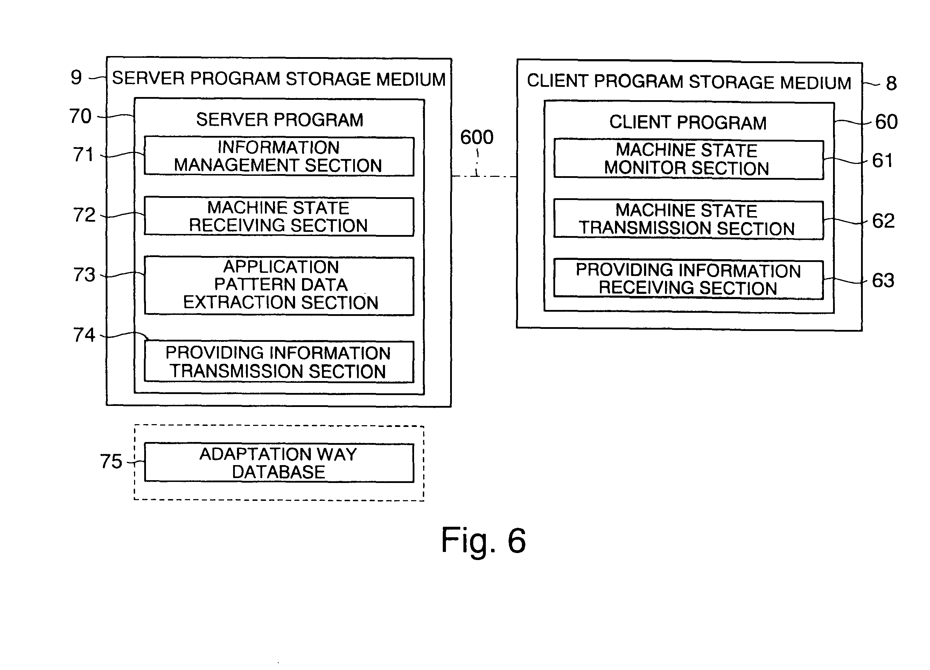

Fig. 6 is a schematic construction view of a server program, a server program storage medium, a client program and a client program storage medium according to a second embodiment of the present invention.

As shown in Fig. 6, a client program storage medium 8 stores therein a client program 60 which causes the computer to operate as a client machine comprising a machine state monitor section 61, a machine state transmission section 62, and an information providing receiving section 63. The client program storage medium 8 typically represents a CD-ROM storing a client program and a hard disk of the computer after the client program stored in the client program storage medium 8 is installed in the computer.

The client program 60 is executed by the computers 300, 400 and 500 (cf. Fig. 1), which are connected via a communication line 600 to a server machine, so that those computers are operated as a client machine which receives information provided from the server machine.

The machine state monitor section 61 monitors a client machine to collect "information as to utilization of a client machine". According to the present embodiment, the "information as to utilization of a client machine" includes a list of software, which is preinstalled in the client machine, information as to installation or uninstall of a software after initiation of the use of the client machine, information as to a set up environment of the client machine and a history of the set up environment, and information representative of the utilization state of the constitution elements of the client machine. The information representative of the utilization state of constitution elements of the client machine includes both information representative of the utilization state of the hardware of the client machine and information representative of the utilization state of the software of the client machine. The machine state monitor section 61 corresponds to an example of the monitor section referred to in the present invention.

The machine state transmission section 62 of the client program 60 in Fig. 6 transmits the "information as to utilization of a client machine", which is collected in the machine state monitor section 61, via the communication line 600 to the server machine. The machine state transmission section 62 corresponds to an example of the client side transmission section.

The information providing receiving section 63 receives information provided from the server machine in accordance with information transmitted from the machine state transmission section 62 to the server machine. The information providing receiving section 63 corresponds to an example of the client side receiving section.

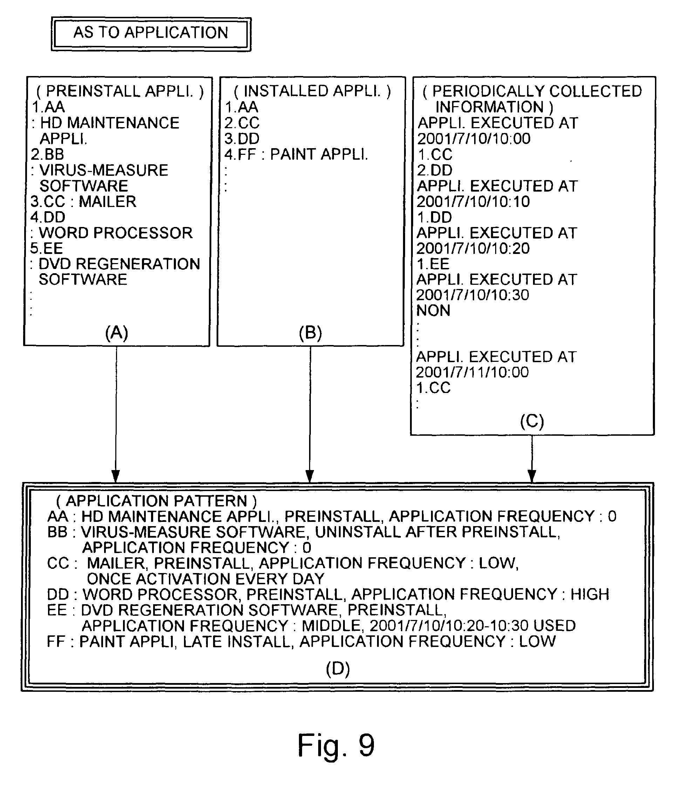

A server program storage medium 9 shown in Fig. 9 stores therein a server program 70 which causes the computer to operate as a server machine having an information management section 71, a machine state receiving section 72, a application pattern data extraction section 73 and a providing information transmission section 74. The server program storage medium 9, in the same way as the client program storage medium 8, typically represents a CD-ROM storing the server program and a hard disk of the computer after the server program stored in the server program storage medium 9 is installed.

The information management section 71 constituting the server program 70 stores information directed to a grasp of an advise for the improvement as to the utilization of the client machine in an adaptation way database 75 constructed in the server machine in association with application pattern data which will be described later. The information management section 71 corresponds to an example of the information management section referred to in the present invention. The adaptation way database 75 corresponds to an example of the providing information database referred to in the present invention.

The machine state receiving section 72 receives the "information as to utilization of a client machine". The machine state receiving section 72 corresponds to an example of the server side receiving section referred to in the present invention.

The application pattern data extraction section 73 extracts an application pattern data representative of the state of the utilization of the client machine from the "information as to utilization of a client machine". The application pattern data extraction section 73 corresponds to an example of the server side transmission section referred to in the present invention together with the providing information transmission section 74 which will be described hereinafter.

The providing information transmission section 74 refers to the adaptation way database 75 using the application pattern data extracted in the application pattern data extraction section 73 to read information representative of an advise for the improvement as to the utilization of the client machine, which is associated with the application pattern data, and transmits the information thus read to the client machine.

Next, there will be described an operation of a server machine and a client machine according to the present embodiment.

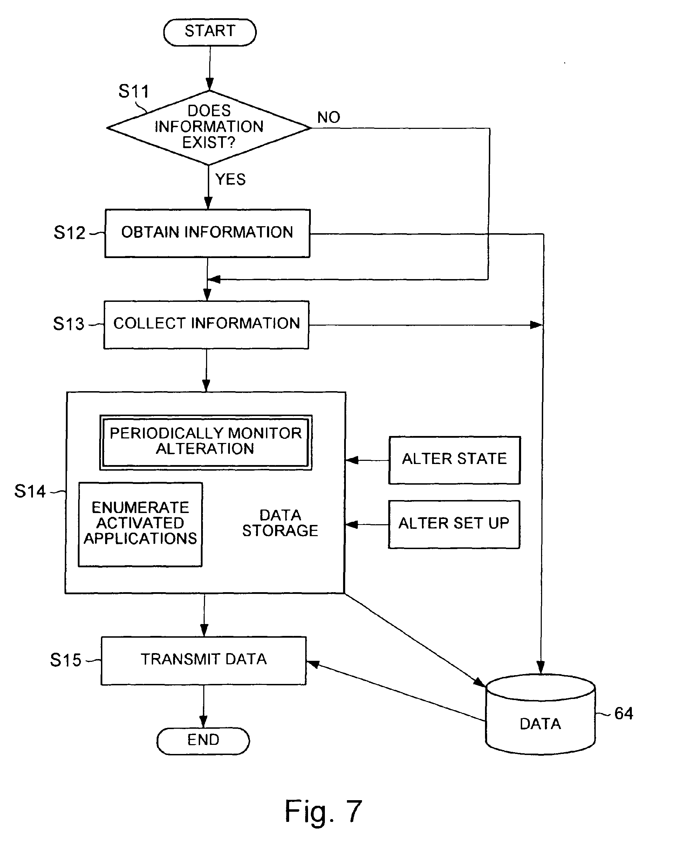

Fig. 7 is a flowchart useful for understanding an operation of a client machine.

When a client program in the client machine starts, first, it is decided whether information, which is prepared beforehand, exists (a step S11).

Information of an object of a decision as to whether it is prepared beforehand implies, for example, information as to a hardware structure at the time of forwarding of a computer in which the client program 60 of Fig. 6 is installed, and information as to a list of a software which is preinstalled. In the event that such information is prepared beforehand, the associated data are obtained and stored in a predetermined data storage area 64 (a step S12).

On the other hand, such information is not stored in the computer at the time of forwarding, such information is collected (a step S13). As the collecting method of such information, it is possible to adopt, for example, a method in which a server machine stores therein information as to structures of hardware and software of a computer at the time of forwarding in association with types of the computer, and when the computer is connected to a server machine, such information is collected from the server machine, or alternatively a method in which when a client program first starts, the client program is used to collect, for example, information of a hardware structure and an installed application program by means of referring to a registry, directly referring to a hardware and deciding existence of a driver. Data thus collected are stored in a data storage area 64.

Thereafter, it is periodically monitored as to whether the computer is altered in a state (a step S14). In this monitoring, the application program now activated is searched, so that generations of events such as the storage of data into the data storage area 64, the alteration of the environment set up, the state of a power source, the alteration of the network connection state and the like are collected and stored in the data storage area 64. Details of the collected information will be described later.

The data thus collected are transmitted to the server machine (a step S15).

It is acceptable that the transmission of the data to the server machine is periodically performed, or alternatively in the event that there is an opportunity that another information is transmitted to the server machine, it is acceptable that the data is transmitted to the server machine together with the another information at that opportunity.

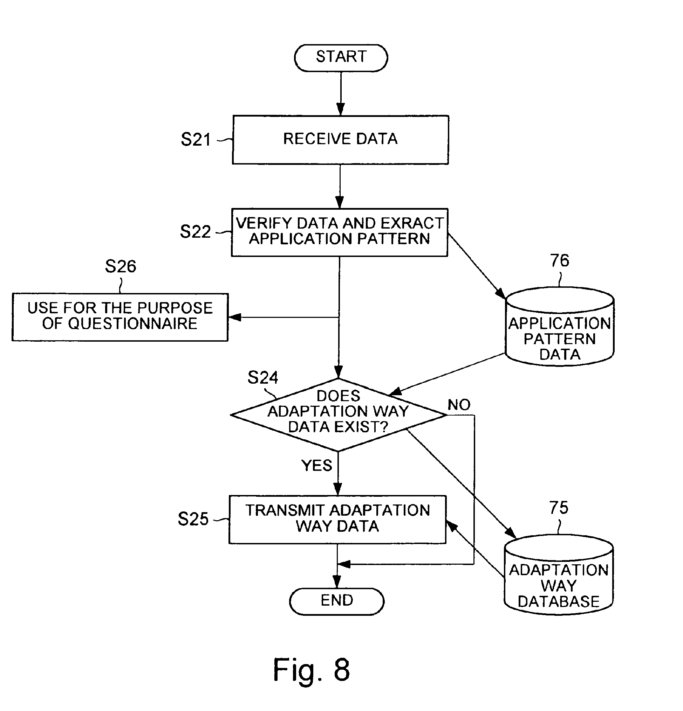

Fig. 8 is a flowchart useful for understanding an operation of a server machine.

Here, in a step S21, data transmitted from the client is received. And in a step S22, the received data is verified to extract an application pattern. The extracted application pattern is once stored in an application pattern data storage area 76 and is used for the purpose of a questionnaire for seeing as to how a number of client machines are used (a step S26).

An adaptation way database 75 stores therein adaptation way data representative of an advice as to improvement of the using way of a computer associated with a application pattern data, in association with the application pattern data. In a step S24, the adaptation way database 75 is referred to, so that it is retrieved whether there exists the adaptation way data associated with the application pattern stored in the application pattern data storage area 76. When the adaptation way data of interest exists, the adaptation way data is transmitted to the client machine (a step S25).

In the client machine side, the adaptation way data is referred to, and it is possible to alter the using way of one's own computer to the more plentiful using way, or alternatively it is possible to delete the unnecessary state to implement the more comfortable operational environment.

Fig. 9 to Fig. 11 are views each showing an example of information as to utilization of a client machine, which is collected by the client machine, and an example of an application pattern extracted from the information.

Fig. 9, Fig. 10 and Fig. 11 show information as to an application, information as to an environment setting and information as to a working state, respectively.

With respect to the application, the client machine first obtains and preserves, at the starting time of the use of the client machine, as shown in part (A) of Fig. 9, information as to a list of applications preinstalled in the client machine and a use of the applications.

Those pieces of information are, as mentioned above, preserved in the client machine beforehand, or obtained from a server machine, or collected by itself at the first starting time of the client machine.

Thereafter, as shown in part (B) of Fig. 9, the client machine collects and preserves information as to installation of the new application or information as to uninstall of the installed application. Further as shown in part (C) of Fig. 9, the application executed at the time of the collection is listed up.

On the other hand, the server machine receives information thus collected and extracts the application pattern as shown in part (D) of Fig. 9.

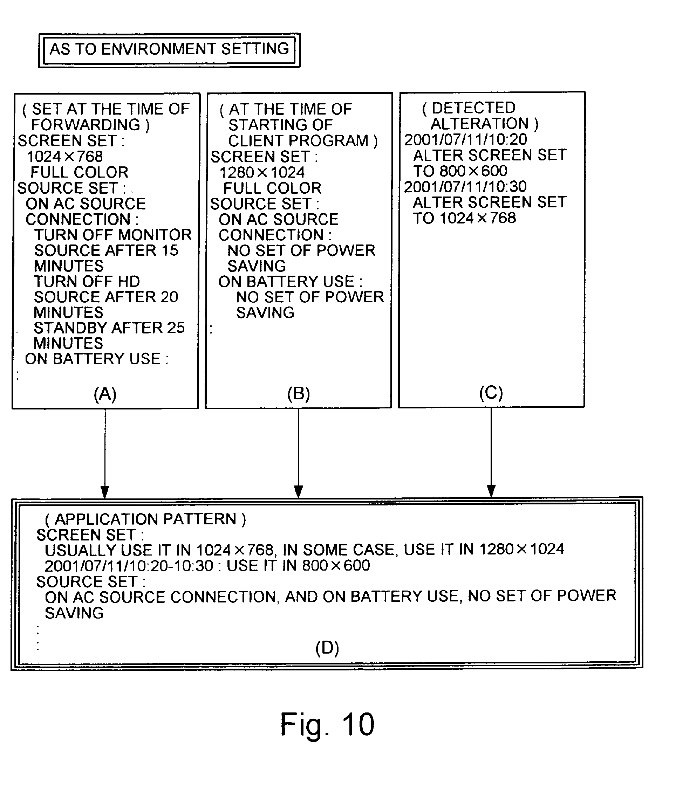

With respect to the environment setting of the client machine, as shown in part (A) of Fig. 10, first, information as to the environment set up at the time of forwarding is obtained and preserved. The set up environment at the time of forwarding is collected by adopting a method of preserving the environment in a computer to be used as a client machine in form of setting up at the time of forwarding of the computer, or obtaining data related to the computer from data in the server, or obtaining the environment at the first starting time of the computer to be used as the client machine.

As shown in part (B) of Fig. 10, when the client program is first activated, the set up environment is obtained and preserved. Thereafter, as shown in part (C) of Fig. 10, whenever an alteration of the set up environment is detected, the associated information is obtained and preserved.

Those pieces of information are transmitted to a server to extract the application pattern as shown in part (D) of Fig. 10 from the information as to the set up environment.

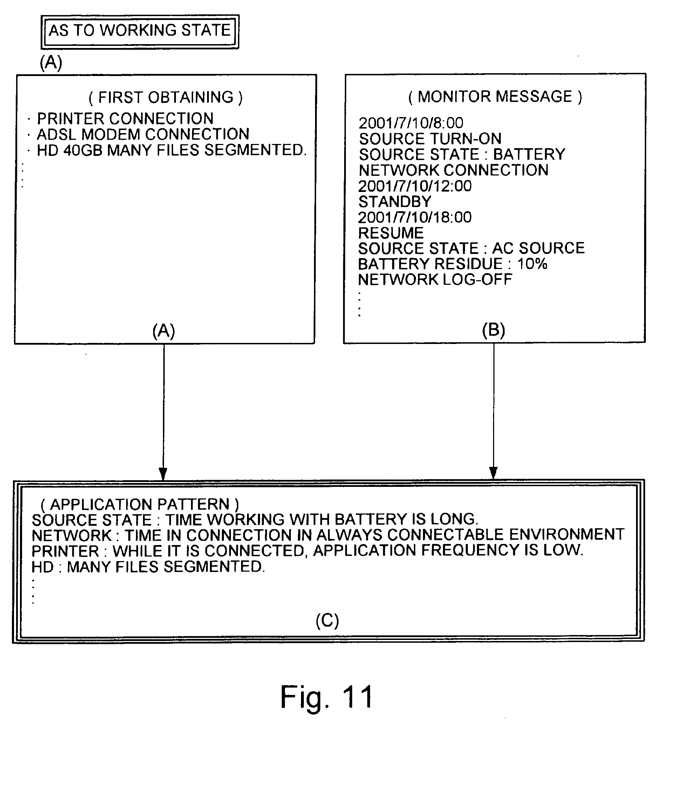

With respect to the working state of the client machine, first, at the starting time of the client machine program, a method of referring to a registry set up or a method of directly accessing the hardware is used, as shown in part (A) of Fig. 11, so that information as to a hardware and contents of the hardware is collected and preserved.

Thereafter, events such as a change of a state of the power source and a change of a connecting state of the network are monitored, so that information is sequentially obtained and preserved.

Those pieces of information are transmitted to a server to extract the application pattern as shown in part (C) of Fig. 11 from those pieces of information.

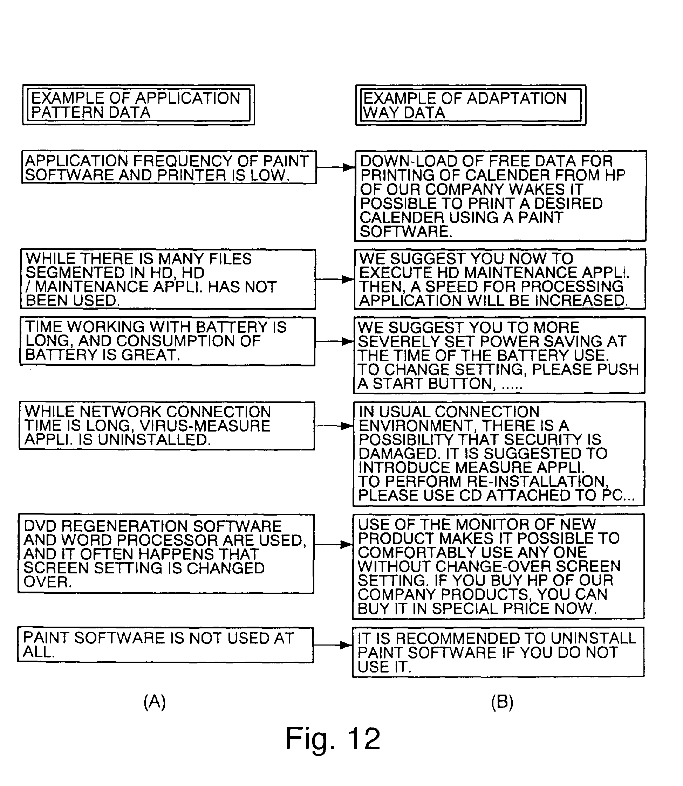

Fig. 12 is a view showing by way of example an application pattern data and adaptation way data, which is stored in the adaptation database shown in Fig. 6 and Fig. 8, in association with the application pattern data.

After the server machine extracts the application pattern in the manner as mentioned above, the server machine reads adaptation way data associated with the application pattern data obtained by the extraction from the adaptation database and transmits the adaptation way data to the client machine. Upon receipt of the adaptation way data, the client machine performs a processing according to the advice indicated by the adaptation way data, so that for example, software, which is not at all used, is uninstalled, or a set up environment is altered, and thus even if a user of the client machine is poor in knowledge for the client machine, it is possible to suitably use the client machine.

Although the present invention has been described with reference to the particular illustrative embodiments, it is not to be restricted by those embodiments but only by the appended claims. It is to be appreciated that those skilled in the art can change or modify the embodiments without departing from the scope and sprit of the present invention.

## Claims

1. A server machine connected via a communication line to a client machine receiving an offer of information, said server machine comprising:
an information management section for storing in a predetermined providing information database, information to be provided for a client machine in association with information to be transmitted from the client machine;
a server side receiving section for receiving information transmitted from said client machine; and
a server side transmission section responsive to a receipt of the information transmitted from said client machine by said server side receiving section, for reading from said providing information database information to be provided for said client machine, which is associated with information involved in the received information from said client machine, and for transmitting the information read from said providing information database to said client machine;
wherein said information management section stores in said providing information database, information indicative of an advice as to utilization of the client machine in form of information to be provided for the client machine.

2. A client machine for connection via a communication line to a server machine providing information, said client machine comprising:
a monitor section for monitoring said client machine to collect information involved in said client machine;
a client side transmission section for transmitting the information collected by said monitor section to said server machine; and
a client side receiving section for receiving information provided from said server machine in accordance with the information transmitted from said client side transmission section to said server machine;
wherein said monitor section collects, as the information involved in said client machine, information as to a grasp of utilization of said client machine, being information including a list of software preinstalled in the client machine and information of install and uninstall of software after initiation of the use of the client machine.

3. A client machine for connection via a communication line to a server machine providing information, said client machine comprising:
a monitor section for monitoring said client machine to collect information involved in said client machine;
a client side transmission section for transmitting the information collected by said monitor section to said server machine; and
a client side receiving section for receiving information provided from said server machine in accordance with the information transmitted from said client side transmission section to said server machine;
wherein said monitor section collects, as the information involved in said client machine, information as to a grasp of utilization of said client machine, being information including a setting environment of the client machine and information of alteration of the setting environment of the client machine.

4. A client machine for connection via a communication line to a server machine providing information, said client machine comprising:
a monitor section for monitoring said client machine to collect information involved in said client machine;
a client side transmission section for transmitting the information collected by said monitor section to said server machine; and
a client side receiving section for receiving information provided from said server machine in accordance with the information transmitted from said client side transmission section to said server machine;
wherein said monitor section collects, as the information involved in said client machine, information as to a grasp of utilization of said client machine, being information including information indicative of a utilization state of structural elements of the client machine.

5. A server machine according to claim 1, wherein said information management section stores in said providing information database, information indicative of an advice as to utilization of the client machine in form of information to be provided for the client machine, and
said server side transmission section, responsive to a receipt of the information transmitted from the client machine by said server side receiving section, extracts information as to utilization of the client machine, reads from said providing information database information indicative of an advice for improvement for utilization of the client machine, and transmits the information thus read to the client machine.

6. A server program storage medium storing a server program to be executed by a computer connected via a communication line to a client machine receiving an offer of information, said server program causing said computer to be a server machine, said server machine comprising:
an information management section storing in a predetermined providing information database information to be provided for a client machine in association with information to be transmitted from the client machine;
a server side receiving section receiving information transmitted from said client machine; and
a server side transmission section responsive to a receipt of the information transmitted from said client machine by said server side receiving section, reading from said providing information database information to be provided for said client machine, which is associated with information involved in the received information from said client machine, and transmitting the information read from said providing information database to said client machine;
wherein said information management section stores in said providing information database, information indicative of an advice as to utilization of the client machine in form of information to be provided for the client machine.

7. A client program storage medium storing a client program to be executed by a computer connected via a communication line to a server machine providing information, said client program causing said computer to be a client machine, said client machine comprising:
a monitor section monitoring said computer to collect information involved in said computer;
a client side transmission section transmitting the information collected by said monitor section to said server machine; and
a client side receiving section receiving information provided from said server machine in accordance with the information transmitted from said client side transmission section to said server machine;
wherein said monitor section collects, as the information involved in said computer, information as to a grasp of utilization of said computer, being information including a list of software preinstalled in the computer and information of install and uninstall of software after initiation of the use of the computer.

8. A client program storage medium storing a client program to be executed by a computer connected via a communication line to a server machine providing information, said client program causing said computer to be a client machine, said client machine comprising:
a monitor section monitoring said computer to collect information involved in said computer;
a client side transmission section transmitting the information collected by said monitor section to said server machine; and
a client side receiving section receiving information provided from said server machine in accordance with the information transmitted from said client side transmission section to said server machine;
wherein said monitor section collects, as the information involved in said computer, information as to a grasp of utilization of said computer, being information including a setting environment of the computer and information of alteration of the setting environment of the computer.

9. A client program storage medium storing a client program to be executed by a computer connected via a communication line to a server machine providing information, said client program causing said computer to be a client machine, said client machine comprising:
a monitor section monitoring said computer to collect information involved in said computer;
a client side transmission section transmitting the information collected by said monitor section to said server machine; and
a client side receiving section receiving information provided from said server machine in accordance with the information transmitted from said client side transmission section to said server machine;
wherein said monitor section collects, as the information involved in said computer, information as to a grasp of utilization of said computer, being information including information indicative of a utilization state of structural elements of the computer.

10. A server program storage medium according to claim 6, wherein said information management section stores in said providing information database, information indicative of an advice as to utilization of the computer in form of information to be provided for the computer,
said server side transmission section, responsive to a receipt of the information transmitted from the computer by said server side receiving section, extracts information as to utilization of the computer, reads from said providing information database information indicative of an advice for improvement for utilization of the computer, and transmits the information thus read to the computer.

11. A client machine for connection via a communication line to a server machine providing information, said client machine comprising:
a monitor section for monitoring said client machine to collect information involved in said client machine;
a client side transmission section for transmitting the information collected by said monitor section to said server machine; and
a client side receiving section for receiving information provided from said server machine in accordance with the information transmitted from said client side transmission section to said server machine.

12. A client machine according to claim 11, wherein said monitor section collects, as the information involved in said client machine, information as to a grasp of utilization of said client machine.

13. A client machine according to claim 12, wherein said monitor section collects, as the information as to a grasp of utilization of said client machine, information as to a grasp of utilization of a database constructed in said client machine.

14. A client machine according claim 11, 12 or 13,
wherein said client machine outputs information provided from said server machine, which is received by said client side receiving section.

15. A server machine for connection via a communication line to a client machine receiving an offer of information, said server machine comprising:
an information management section storing in a predetermined providing information database, information to be provided for a client machine in association with information to be transmitted from the client machine;
a server side receiving section for receiving information transmitted from said client machine; and
a server side transmission section responsive to a receipt of the information transmitted from said client machine by said server side receiving section, for reading from said providing information database information to be provided for said client machine, which is associated with information involved in the received information from said client machine, and for transmitting the information read from said providing information database to said client machine.

16. A server machine according to claim 15, wherein said client machine accesses a predetermined reference information database constructed in said client machine to obtain information in said reference information database, and
said information management section stores in said providing information database, new information associated with information in said reference information database in form of information to be provided for the client machine.

17. A client machine according to claim 11, wherein said client machine further comprises an information reference section referring to information stored in a predetermined reference information database in accordance with an operation,
said monitor section monitors an access to the information stored in said reference information database based on the operation,
said client machine further comprises a decision section deciding whether discrimination information indicative of accessed information is to be transmitted to said server machine in accordance with an access monitoring result by said monitor section, and
said client side transmission section transmits the discrimination information to said server machine when said decision section decides that the discrimination information is to be transmitted to said server machine.

18. A client machine according to claim 17, wherein said monitor section monitors an access to the information stored in said reference information database based on the operation to collect information indicative of a number of times of access as to information, and
said decision section decides, when information indicative that a number of times of access reaches a predetermined number of times is generated as a result of monitoring by said monitor section, that the discrimination information indicative of accessed information is to be transmitted to said server machine.

19. A server machine according to claim 15, wherein said client machine further comprises an information reference section referring to information stored in a predetermined reference information database in accordance with an operation,
said information management section stores in said providing information database new information associated with information in said reference information database in form of information to be provided for the client machine,
said server side receiving section receives discrimination information indicative of accessed information by said reference information database in the client machine, and
said server side transmission section, responsive to a receipt of the discrimination information by said server side receiving section, reads from said providing information database new information associated with information indicated by the discrimination information, and transmits the new information.

20. A client program storage medium storing a client program to be executed by a computer connected via a communication line to a server machine providing information, said client program causing said computer to be a client machine, said client machine comprising:
a monitor section monitoring said computer to collect information involved in said computer;
a client side transmission section transmitting the information collected by said monitor section to said server machine; and
a client side receiving section receiving information provided from said server machine in accordance with the information transmitted from said client side transmission section to said server machine.

21. A client program storage medium according to claim 20, wherein said monitor section collects, as the information involved in said computer, information as to a grasp of utilization of said computer.

22. A client program storage medium according to claim 21, wherein said monitor section collects, as the information as to a grasp of utilization of said client program storage medium, information as to a grasp of utilization of a database constructed in said client program storage medium.

23. A client program storage medium according to claim 20, wherein said client program storage medium outputs information provided from said server machine, which is received by said client side receiving section.

24. A server program storage medium storing a server program to be executed by a computer connected via a communication line to a client machine receiving an offer of information, said server program causing said computer to be a server machine, said server machine comprising:
an information management section storing in a predetermined providing information database information to be provided for a client machine in association with information to be transmitted from the client machine;
a server side receiving section receiving information transmitted from said client machine; and
a server side transmission section responsive to a receipt of the information transmitted from said client machine by said server side receiving section, reading from said providing information database information to be provided for said client machine, which is associated with information involved in the received information from said client machine, and transmitting the information read from said providing information database to said client machine.

25. A server program storage medium according to claim 24, wherein said client machine accesses a predetermined reference information database constructed in said client machine to obtain information in said reference information database, and
said information management section stores in said providing information database, new information associated with information in said reference information database in form of information to be provided for the client machine.

26. A client program storage medium according to claim 20, wherein said client machine further comprises an information reference section referring to information stored in a predetermined reference information database in accordance with an operation,
said monitor section monitors an access to the information stored in said reference information database based on the operation,
said client machine further comprises a decision section deciding whether discrimination information indicative of accessed information is to be transmitted to said server machine in accordance with an access monitoring result by said monitor section, and
said client side transmission section transmits the discrimination information to said server machine when said decision section decides that the discrimination information is to be transmitted to said server machine.

27. A client program storage medium according to claim 26, wherein said monitor section monitors an access to the information stored in said reference information database based on the operation to collect information indicative of a number of times of access as to information, and
said decision section decides, when information indicative that a number of times of access reaches a predetermined number of times is generated as a result of monitoring by said monitor section, that the discrimination information indicative of accessed information is to be transmitted to said server machine.

28. A server program storage medium according to claim 24, wherein said client machine further comprises an information reference section referring to information stored in a predetermined reference information database in accordance with an operation,
said information management section stores in said providing information database new information associated with information in said reference information database in form of information to be provided for the client machine,
said server side receiving section receives discrimination information indicative of accessed information by said reference information database in the client machine, and
said server side transmission section, responsive to a receipt of the discrimination information by said server side receiving section, reads from said providing information database new information associated with information indicated by the discrimination information, and transmits the new information.

29. A server-client system having a server machine providing information and a client machine receiving an offer of information, which are coupled with one another via a communication line,
wherein said client machine comprises:
a monitor section monitoring said client machine to collect information involved in said client machine;
a client side transmission section transmitting the information collected by said monitor section to said server machine; and
a client side receiving section receiving information provided from said server machine in accordance with the information transmitted from said client side transmission section to said server machine, and
wherein said server machine comprises:
an information management section storing in a predetermined providing information database information to be provided for a client machine in association with information to be transmitted from the client machine;
a server side receiving section receiving information transmitted from said client machine; and
a server side transmission section responsive to a receipt of the information transmitted from said client machine by said server side receiving section, reading from said providing information database information to be provided for said client machine, which is associated with information involved in the received information from said client machine, and transmitting the information read from said providing information database to said client machine.

30. An information processing method in a server-client system having a server machine providing information and a client machine receiving an offer of information, which are coupled with one another via a communication line,
wherein said server machine stores in a predetermined providing information database, information to be provided for a client machine in association with information to be transmitted from the client machine,
said client machine monitors said client machine to collect information involved in said client machine, and transmits the collected information to said server machine,
said server machine receives the information transmitted from said client machine, reads from said providing information database information to be provided for said client machine, which is associated with information involved in the received information from said client machine, and transmits the information read from said providing information database to said client machine, and
said client machine receives information provided from said server machine in accordance with the information transmitted from said client machine to said server machine.
